# EUROPEAN PATENT APPLICATION

(11) **EP 2 876 599 A1**
(43) Date of publication of application: **27.05.2015**
(21) Application number: 13820466.4
(22) Date of filing: 11.07.2013
(51) Int. Cl.: G06Q 50/04, G06Q 10/06

(54) **MOLD MANAGEMENT SYSTEM HAVING PRESET AND AUTOMATIC SETTING FUNCTIONS**

(30) Priority: 18.07.2012 KR 20120078292
(71) Applicant: PS Tech Co. Ltd., Seoul 133-821 (KR); Best Information Technology Co., Ltd., Seoul 137-912 (KR)
(72) Inventor: YU, Kwang Taig, Seoul 157-910 (KR)
(74) Representative: Adamson Jones
(86) International application number: PCT/KR2013/006200
(87) International publication number: WO 2014/014233

(57) **Abstract**

A mold management system with a preset function and an automatic setting function is provided to match final data about the number of shot counts of a mold stored in a terminal with data stored in a new mold counter during the replacement of the new mold counter, thereby increasing management efficiency, saving equipment manpower and costs during installation and improving work convenience. The mold management system includes a mold counter incorporated in a mold and counting the number of shot counts of the mold; and a terminal collecting and storing data about the number of shot counts of the mold from the mold counter, transmitting data about the number of shot counts of the mold from the mold counter before it is replaced with a new one to a mold counter and setting the operation of the mold counter.

## Description

### [Technical Field]

The present invention relates to a mold management system with a preset function and an automatic setting function.

### [Background Art]

After a mold is repeatedly used for a long time, the accuracy of the mold may be lowered. Thus, the number of uses of the mold is counted and the mold is maintained and repaired after being used by a predetermined number of times.

To this end, a mold counter called a shot counter is incorporated into the mold to then be used. The mold counter is configured to mechanically count the number of shot counts of the mold, that is, the number of uses, by rotating a plurality of digit rings using a plurality of rotating plates according to the operation of the mold.

The mold management system having the built-in mold counter may encounter malfunction or deterioration of the mold counter due to prolonged and repeated use. Thus, it is necessary to replace the mold counter with a new one after it is used by a predetermined number of times. Here, since data about the number of uses or use time required for fabricating the mold is manually set to the newly installed mold counter, operator's management efficiency may be lowered. Accordingly, the conventional mold management system having a built-in mold counter is disadvantageous in that work efficiency is lowered during installation of the mold.

### [Disclosure of the Invention]

### [Technical Problems]

The present invention has been made in an effort to solve the problems of the prior art, and it is an object of the present invention to provide a mold management system with a preset function and an automatic setting function is provided to match final data about the number of shot counts of a mold stored in a terminal when a new mold counter is installed, thereby increasing management efficiency, saving equipment manpower and costs and improving work convenience.

### [Technical Solution]

In accordance with an aspect of the present invention, the above and other objects can be accomplished by providing a mold management system with a preset function and an automatic setting function, the mold management system including a mold counter incorporated in a mold and counting the number of shot counts of the mold, and a terminal collecting and storing data about the number of shot counts of the mold from the mold counter, transmitting data about the number of shot counts of the mold from the mold counter before it is replaced with a new one to a mold counter and setting the operation of the mold counter.

The mold management system may further include a remote control unit connected to the terminal through a wired/wireless communication network, wherein the remote control unit sets ID's of the mold counter and the terminal and controls operations of the mold counter and the terminal based on the set ID's of the mold counter and the terminal.

The mold counter may include a communication unit performing near field communication with the terminal, a counting unit counting the number of shot counts of the mold, a storage unit including intrinsic ID data of the mold counter and accumulating and storing the counted number of shot counts of the mold, and a presetting unit setting the operation of the counting unit using data about the number of shot counts of the mold transmitted from the terminal.

The mold counter may further include a comparative determination unit transmitting data about the number of shot counts of the mold to the terminal when the data about the number of shot counts of the mold transmitted from the terminal is different from the data about the counted number of shot counts of the mold.

The terminal may include a first communication unit performing near field communication with the mold counter, a second communication unit performing wired/wireless communication with the remote control unit, a memory unit including ID data of the terminal and collecting and storing data about the number of shot counts of the mold transmitted from the mold counter, an approval unit approving connection between the mold counter and the terminal based on ID data of the mold counter and ID data of the terminal, and a synchronization unit synchronizing a time of the mold counter when the connection between the mold counter and the terminal is approved by the approval unit.

The memory unit may accumulate and store the number of shot counts of the mold counted by the mold counter, and the number of shot counts of the mold transmitted to the mold counter after the mold counter is replaced may be the finally accumulated number of shot counts of the mold.

The data about the number of shot counts of the mold may include the number of shot counts of the mold, shot time, cycle time and ID data.

The terminal may further include an optimum value calculation unit setting an average cycle time among cycle times of the mold counter, excluding the maximum value and the minimum value, or a real-time cycle time, as an optimum cycle time of the mold.

The remote control unit may set the operation of the mold counter by transmitting the set optimum value to the mold counter after being replaced through the first communication unit.

The remote control unit may synchronize the time of the mold counter with a standard time of a location where the mold is installed through the synchronization unit.

### [Advantageous Effects]

As described above, in the mold management system with a preset function and an automatic setting function according to the present invention, when a new mold counter is installed in the mold being in use, data stored in the new mold counter is matched with data stored in the terminal by setting the number of shot counts of the mold being in use to the new mold counter, thereby increasing management efficiency, saving equipment manpower and costs and improving work convenience.

### [Description of Drawings]

In the figures:
FIG. 1 is a diagram schematically illustrating a mold management system with a preset function and an automatic setting function according to an embodiment of the present invention;
FIG. 2A is a block diagram illustrating a structure of a mold counter shown in FIG. 1 and FIG. 2B is a block diagram illustrating a structure of a terminal shown in FIG. 1;
FIGS. 3A and 3B illustrate tables of exemplary data about the number of shot counts of the mold counter shown in FIG. 1;
FIG. 4 is a flowchart illustrating an operation of a mold management system with a preset function and an automatic setting function according to an embodiment of the present invention; and
FIG. 5 is a flowchart illustrating a time synchronization operation of a mold management system with a preset function and an automatic setting function according to an embodiment of the present invention.

### [Best Mode for Carrying Out the Invention]

Hereinafter, preferred embodiments of the present invention will now be described in detail with reference to the accompanying drawings, such that those skilled in the art can easily practice the present invention.

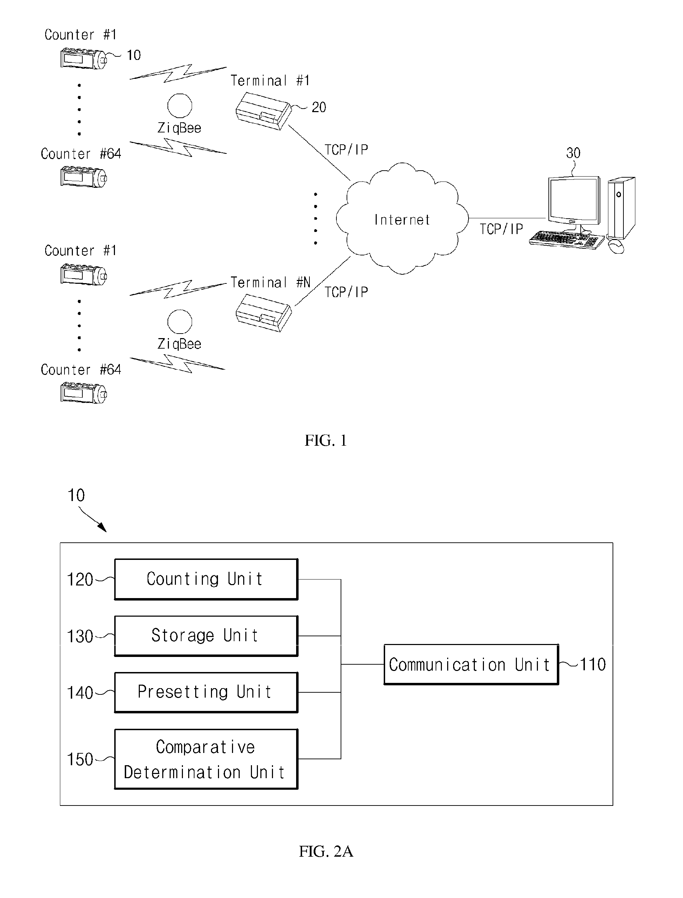

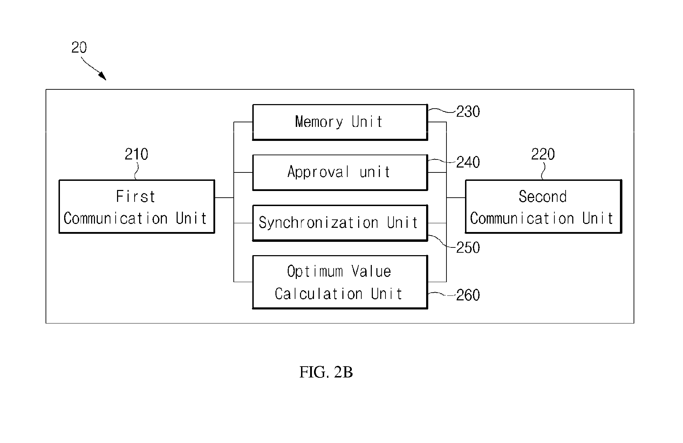

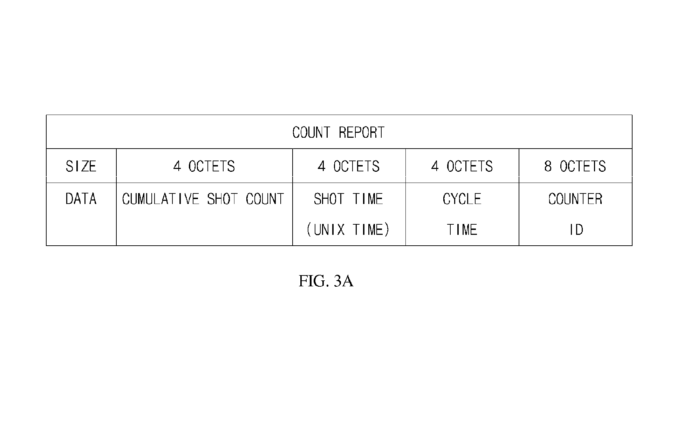

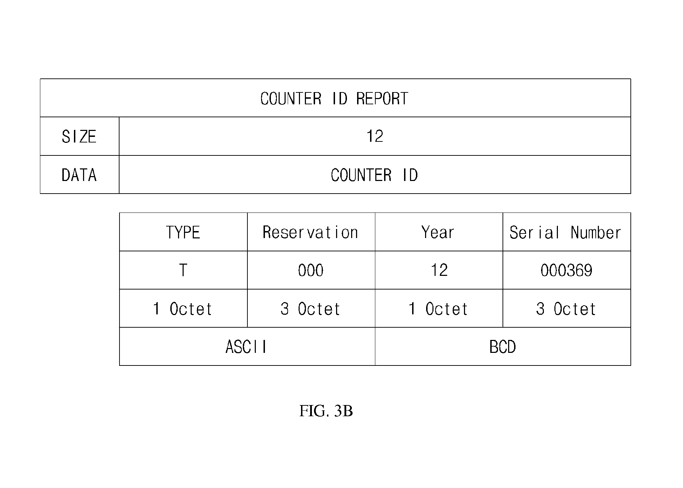

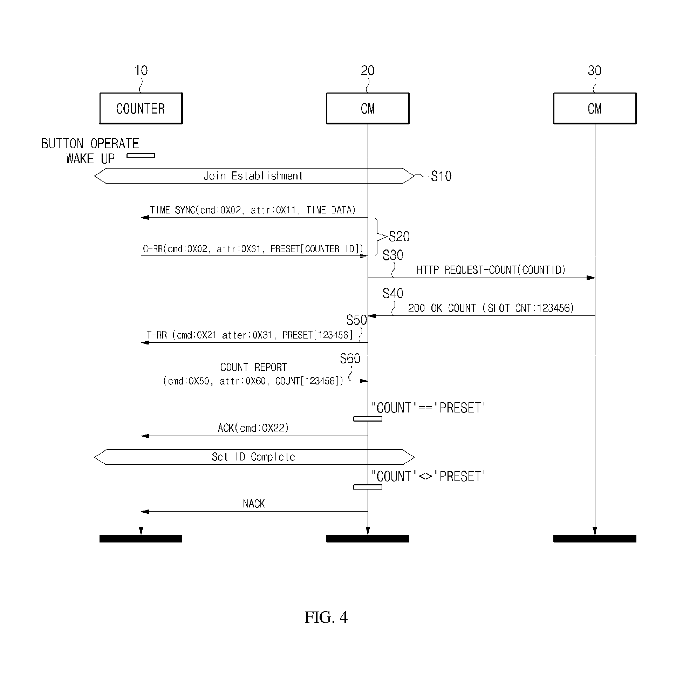

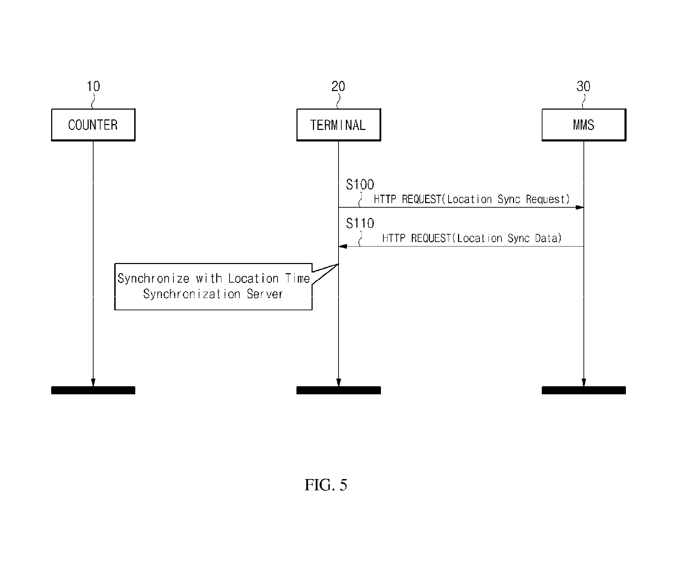

FIG. 1 is a diagram schematically illustrating a mold management system with a preset function and an automatic setting function according to an embodiment of the present invention, FIG. 2A is a block diagram illustrating a structure of a mold counter shown in FIG. 1 and FIG. 2B is a block diagram illustrating a structure of a terminal shown in FIG. 1, FIGS. 3A and 3B illustrate tables of exemplary data about the number of shot counts of the mold counter shown in FIG. 1, FIG. 4 is a flowchart illustrating an operation of a mold management system with a preset function and an automatic setting function according to an embodiment of the present invention, and FIG. 5 is a flowchart illustrating a time synchronization operation of a mold management system with a preset function and an automatic setting function according to an embodiment of the present invention.

As shown in FIGS. 1 to 3B, the mold management system with a preset function and an automatic setting function according to an embodiment of the present invention includes a mold counter 10, a terminal 20 and a remote control unit 30.

The mold counter 10 is incorporated into the mold and counts the number of shot counts of the mold. That is to say, the mold counter 10 is configured to mechanically count the number of shot counts of the mold, that is, the number of uses, by rotating a plurality of digit rings using a plurality of rotating plates according to the operation of the mold.

The mold counter 10 includes a communication unit 110, a counting unit 120, a storage unit 130, a presetting unit 140 and a comparative determination unit 150.

The communication unit 110 performs near field communication with the terminal 20. The communication unit 110 transmits the number of shot counts of the mold counted by the counting unit 120 to the terminal 20, and when the mold counter 10 incorporated into the mold is replaced with a new one, receives data about the number of shot counts of the existing mold counter 10 from the terminal 20 under the control of the remote control unit 30 In addition, the communication unit 110 may transmit data about a temperature of the mold, a power supply state, or a short state to the terminal 20. Meanwhile, the near field communication may be performed using a ZigBee communication network. The ZigBee communication network is a data communication protocol operating at bands 868/915 MHz and 2.4 GHz based on the IEEE 802.15.4 (LR-WPAN: Low Rate-Wireless Personal Area Network) PHY/MAC.

The counting unit 120 counts the number of shot counts of the mold. The counting unit 120 mechanically counts the number of shot counts of the mold by rotating a plurality of digit rings using a plurality of rotating plates according to the operation of the mold.

The counting unit 120 may count the cycle time and shot time as well as the number of shot counts of the mold.

The storage unit 130 includes intrinsic ID data of the mold counter 10 and accumulates and stores the number of shot counts of the mold counted by the counting unit 120. The number of shot counts of the mold accumulated and stored in the storage unit 130 may be modified (that is, replaced) under the control of the remote control unit 30 when a parameter due to an external surrounding of the mold counter 10 is generated. In addition, the storage unit 130 may be a flash memory basically mounted in the mold counter 10, but aspects of the present invention are not limited thereto.

When the mold counter 10 incorporated into the mold is replaced with a new one, the presetting unit 140 sets the operation of the counting unit 120 of the new mold counter 10 using data about the number of shot counts of the mold incorporating the existing mold counter 10, received from the terminal 20. In more detail, in order to match data of the existing mold counter 10 with data of the new mold counter 10, the presetting unit 140 may receive the shot count of the existing mold counter 10, shot time, cycle time and intrinsic counter ID data from the terminal 20 under the control of the remote control unit 30 and may set the number of shot counts of the mold, shot time and cycle time of the new mold counter 10 based on the data of the existing mold counter 10. As shown in FIGS. 3A and 3B, the data about the number of shot counts of the mold includes the number of cumulative shot counts of the mold (e.g., 4 octets), shot time (e.g., 4 octets), cycle time (e.g., 4 octets) and counter ID data (e.g., 8 octets). In addition, the presetting unit 140 may set and control a transmission time range of the communication unit 110. Therefore, the presetting unit 140 may set a transmission time range of the communication unit 110 to a predetermined cycle and may periodically transmit data about the number of shot counts of the mold to the terminal 20 in a secured manner. The presetting unit 140 has a built-in software program for implementing the aforementioned operation.

When the data about the number of shot counts of the mold, transmitted from the terminal 20, is different from the data about the number of shot counts of the mold, counted by the mold counter 10, the comparative determination unit 150 transmits a request for the data about the number of shot counts of the mold to the terminal 20. That is to say, in order to match the data about the number of shot counts of the mold, transmitted from the terminal 20, with the data about the number of shot counts of the mold, counted by the mold counter 10, the comparative determination unit 150 may transmit a request for the corresponding data to the terminal 20 to newly set data when the data about the number of shot counts of the mold, transmitted from the terminal 20, is different from the data about the number of shot counts of the mold, counted by the mold counter 10.

The terminal 20 is a network gateway device enabling communication to be performed between the mold counter 10 and the remote control unit 30 using different communication networks or protocols. The terminal 20 collects and stores data about the number of shot counts of the mold from the mold counter 10, or when the mold counter 10 is replaced, data about the number of shot counts of the mold, counted by the mold counter 10 before it is replaced, is transmitted to the mold counter 10 after it is replaced to set the operation of the mold counter 10.

To implement the aforementioned operation, the terminal 20 includes a first communication unit 210, a second communication unit 220, a memory unit 230, an approval unit 240, a synchronization unit 250 and an optimum value calculation unit 260.

The first communication unit 210 performs near field communication with the mold counter 10. The near field communication may be performed using a ZigBee communication network.

The second communication unit 220 performs wired/wireless communication with the remote control unit 30. The wired/wireless communication network may include a TCP/IP protocol connected in a wired manner, a WAP protocol or an OSI 7 layer connected in a wireless manner, an Internet network using HTTP, but aspects of the present invention are not limited thereto. In addition, the second communication unit 220 includes an interface (not shown) to enable wired/wireless communication, and transmits a control command for setting the mold counter 10 and controlling the operation of the mold counter 10 through the wired/wireless communication terminal 20 installed in an external device, such as the remote control unit 30. Accordingly, the user can efficiently manage the mold counter 10 from a remote location.

The memory unit 230 includes ID data of the terminal 20 and collects and stores the data about the number of shot counts of the mold, transmitted from the mold counter 10. That is to say, the memory unit 230 receives the number of shot counts of the mold counted by the mold counter 10 from the mold counter 10 and accumulates and stores the received number of shot counts of the mold. Here, the number of shot counts of the mold may be a counted value collected per unit time (counts/sec). In addition, after the mold counter 10 is replaced, the number of shot counts of the mold, transmitted to the mold counter 10, is the finally accumulated number of shot counts of the mold.

The approval unit 240 approves connection between the mold counter 10 and the terminal 20 based on ID data of the mold counter 10 and the ID data of the terminal 20.

The optimum value calculation unit 260 sets an optimum cycle time using data about the number of shot counts of the mold, stored in the memory unit 230, or real-time cycle time of the mold counter 10. That is to say, the optimum value calculation unit 260 sets an average cycle time or the real-time cycle time of the mold counter 10, among cycle times of the mold counter 10, excluding the maximum value and the minimum value, as the optimum cycle time of the mold. The optimum value set by the optimum value calculation unit 260 is transmitted through the first communication unit 210 to the mold counter 10 after it is replaced under the control of the remote control unit 30, and the operation of the mold counter 10 is set by the presetting unit 140 of the mold counter 10. Therefore, according to the present invention, an optimum value as an actually effective cycle time value is calculated in fabricating a mold, and the calculated optimum value is set to the new mold counter 10, thereby improving work efficiency.

The remote control unit 30 is a computer device including software such as a user interface (UI) or a database management system (DBMS). The remote control unit 30 is connected to the terminal 20 through the wired/wireless communication network. The remote control unit 30 sets ID's of the mold counter 10 and the terminal 20 and controls operations of the mold counter 10 and the terminal 20 based on the set ID's of the mold counter 10 and the terminal 20.

In addition, the remote control unit 30 may synchronize a time of the mold counter 10 with a standard time of a location where the mold is installed through the synchronization unit 250. The operation of the remote control unit 30 will later be described in more detail with reference to FIG. 5.

As shown in FIG. 4, the mold management system with a preset function and an automatic setting function according to an embodiment of the present invention matches data about the number of shot counts of the existing mold counter 10 with data about the number of shot counts of the new mold counter 10 when the mold counter 10 is replaced through communication between the mold counter 10 and the terminal 20.

Therefore, according to the present invention, when a new mold counter 10 is installed in the mold being in use, data stored in the new mold counter 10 is matched with data stored in the terminal 20 by setting the number of shot counts of the mold being in use to the new mold counter 10, thereby increasing reliability of mold management data, and improving management efficiency, saving equipment manpower and costs and improving work convenience when the mold counter 10 is installed using automatic setting function.

As shown in FIG. 5, in the mold management system with a preset function and an automatic setting function according to an embodiment of the present invention, in order to achieve time synchronization between the mold counter 10 and the terminal 20, the remote control unit 30 synchronizes a time of the mold counter 10 with a standard time of a location where the mold is installed using the synchronization unit 250.
Therefore, according to the present invention, when a new mold counter 10 is installed in the mold being in use, data stored in the new mold counter 10 is matched with data stored in the terminal 20 by setting the number of shot counts of the mold being in use to the new mold counter 10, thereby increasing reliability of mold management data, and improving management efficiency, saving equipment manpower and costs and improving work convenience when the mold counter 10 is installed using automatic setting function.
As shown in FIG. 5, in the mold management system with a preset function and an automatic setting function according to an embodiment of the present invention, in order to achieve time synchronization between the mold counter 10 and the terminal 20, the remote control unit 30 synchronizes a time of the mold counter 10 with a standard time of a location where the mold is installed using the synchronization unit 250.

The terminal 20 connected to the mold counter 10 may be distributed to many countries to be installed. However, since the respective countries may have different reference times, a time difference may be generated between the mold counter 10 and the terminal 20. Therefore, the terminal 20 transmits a time synchronization request (i.e., HTTP request: Location Sync Request) to the remote control unit 30 (S100), and the remote control unit 30 transmits corresponding data (i.e., HTTP request: Location Sync Data) to the terminal 20 (S110), so that the synchronization unit 250 synchronizes a time of the mold counter 10 with a standard time of a location where the mold is installed through the synchronization unit, thereby preventing the time difference from being generated between the mold counter 10 and the terminal 20 in each country.

Although the mold management system with a preset function and an automatic setting function according to an embodiment of the present invention has been described in detail hereinabove, it should be understood that many variations and modifications of the basic inventive concept herein described, which may appear to those skilled in the art, will still fall within the spirit and scope of the exemplary embodiments of the present invention as defined by the appended claims.

## Claims

1. A mold management system with a preset function and an automatic setting function, the mold management system comprising:
a mold counter incorporated in a mold and counting the number of shot counts of the mold; and
a terminal collecting and storing data about the number of shot counts of the mold from the mold counter, transmitting data about the number of shot counts of the mold from the mold counter before it is replaced with a new one to a mold counter and setting the operation of the mold counter,
wherein the mold counter comprises:
a communication unit performing near field communication with the terminal;
a counting unit counting the number of shot counts of the mold;
a storage unit including intrinsic ID data about the mold counter and accumulating and storing the counted number of shot counts of the mold;
a presetting unit setting the operation of the counting unit using data about the number of shot counts of the mold transmitted from the terminal; and
a comparative determination unit transmitting a request for data about the number of shot counts of the mold to the terminal when the data about the number of shot counts of the mold transmitted from the terminal is different from the data about the counted number of shot counts of the mold.

2. The mold management system of claim 1, further comprising: a remote control unit connected to the terminal through a wired/wireless communication network, wherein the remote control unit sets ID's of the mold counter and the terminal and controls operations of the mold counter and the terminal based on the set ID's of the mold counter and the terminal.

3. The mold management system of claim 2, wherein the terminal comprises:
a first communication unit performing near field communication with the mold counter;
a second communication unit performing wired/wireless communication with the remote control unit;
a memory unit including ID data of the terminal and collecting and storing data about the number of shot counts of the mold transmitted from the mold counter;
an approval unit approving connection between the mold counter and the terminal based on ID data of the mold counter and ID data of the terminal; and
a synchronization unit synchronizing a time of the mold counter when the connection between the mold counter and the terminal is approved by the approval unit.

4. The mold management system of claim 3, wherein the memory unit accumulates and stores the number of shot counts of the mold counted by the mold counter, and the number of shot counts of the mold transmitted to the mold counter after the mold counter is replaced is the finally accumulated number of shot counts of the mold.

5. The mold management system of claim 3, wherein the data about the number of shot counts of the mold includes the number of shot counts of the mold, a shot time, cycle time and ID data.

6. The mold management system of claim 5, wherein the terminal further comprises an optimum value calculation unit setting an average cycle time of the mold counter, excluding the maximum value and the minimum value, or a real-time cycle time, as an optimum cycle time of the mold.

7. The mold management system of claim 6, wherein the remote control unit sets the operation of the mold counter by transmitting the set optimum value to the mold counter after being replaced through the first communication unit.

8. The mold management system of claim 4, wherein the remote control unit synchronizes the time of the mold counter with a standard time of a location where the mold is installed through the synchronization unit.
